(19) Europäisches Patentamt
European Patent Office
Office européen des brevets

(11) **EP 1 114 300 B1**

(12) **FASCICULE DE BREVET EUROPEEN**

(45) Date de publication et mention
de la délivrance du brevet:
**21.11.2007 Bulletin 2007/47**

(51) Int Cl.:
***G01K 11/32*** *(2006.01)*

(21) Numéro de dépôt: **99968709.8**

(22) Date de dépôt: **03.09.1999**

(86) Numéro de dépôt international:
**PCT/EP1999/006499**

(87) Numéro de publication internationale:
**WO 2000/014498 (16.03.2000 Gazette 2000/11)**

(54) **CAPTEUR DE TEMPERATURE A FIBRE OPTIQUE**

FASEROPTISCHER TEMPERATURSENSOR

TEMPERATURE SENSOR WITH OPTICAL FIBRE

(84) Etats contractants désignés:
**AT BE CH CY DE DK ES FI FR GB GR IE IT LI LU MC NL PT SE**

(30) Priorité: **04.09.1998 EP 98116774**

(43) Date de publication de la demande:
**11.07.2001 Bulletin 2001/28**

(73) Titulaire: **Talltec Technologies Holdings S.A.
2012 Luxembourg (LU)**

(72) Inventeur: **BOUAMRA, Mohamed
64500 Saint Jean de Luz (FR)**

(74) Mandataire: **Ravenel, Thierry Gérard Louis et al
I C B,
Ingénieurs Conseils en Brevets SA,
7, rue des Sors
2074 Marin (CH)**

(56) Documents cités:
EP-A- 0 108 671           FR-A- 2 664 695
GB-A- 2 252 402           US-A- 4 151 747
US-A- 5 258 614

• **PATENT ABSTRACTS OF JAPAN vol. 006, no. 162 (P-137), 25 août 1982 (1982-08-25) -& JP 57 079416 A (MITSUBISHI ELECTRIC CORP), 18 mai 1982 (1982-05-18)**
• **PATENT ABSTRACTS OF JAPAN vol. 007, no. 075 (P-187), 29 mars 1983 (1983-03-29) -& JP 58 006431 A (NIPPON DENSHIN DENWA KOSHA), 14 janvier 1983 (1983-01-14)**

**Description**

La présente invention se rapporte au domaine des capteurs de température et concerne plus particulièrement un capteur de température à fibre optique de faible encombrement.

Actuellement, les capteurs de température à fibre optique se répartissent en deux catégories : la première catégorie concerne les capteurs optiques dits extrinsèques et la seconde ceux dits intrinsèques. Dans les capteurs optiques extrinsèques, la fibre optique est un élément passif assurant une simple fonction de ligne de transmission et elle doit dès lors être parfaitement insensible à la grandeur physique à mesurer. Au contraire, pour les capteurs optiques intrinsèques, c'est la fibre optique elle même qui est l'élément sensible à la grandeur à mesurer, laquelle agit directement sur les caractéristiques physiques propres de la fibre.

On connaît, notamment par le brevet français FR 2 664 695, un capteur de température à fibre optique de type intrinsèque dans lequel la fibre optique de type multimode qui comporte une longueur de liaison aller (depuis la source optique) et une longueur de liaison retour (vers le circuit de détection et d'exploitation) est conformée dans sa partie sensible selon un enroulement de courbure déterminée et à plusieurs tours disposé dans le milieu à surveiller. Ce capteur repose sur les propriétés de biréfringence d'une fibre optique courbée. On sait, en effet, que la courbure d'une fibre, en induisant des contraintes dans cette fibre, provoque des pertes de propagation et donc une baisse de l'intensité lumineuse transmise.

Toutefois, un tel capteur de température présente encore de nombreux inconvénients. Tout d'abord, la configuration de la partie sensible de la fibre optique, enroulée sur plusieurs tours, influe sur l'encombrement et la durée de vie du capteur. Chaque fibre optique présente en effet un rayon critique de courbure Rc pour lequel il y a fracture de la fibre (par exemple pour une fibre toute silice de rayon externe r, ce rayon de courbure critique est égal à 100 r/ 3.3). Dès lors, l'encombrement du capteur est imposé par cette dimension minimale et la durée de vie du capteur sera d'autant plus faible que le diamètre d'enroulement se rapprochera de ce diamètre critique de fracture. Ensuite, le recours à une fibre optique multimode engendre des conditions d'exploitation particulièrement sévères. En effet, une telle fibre comporte un très grand nombre de modes de propagation, lesquels dépendent fortement à la fois des caractéristiques opto-géométriques de la fibre (indice et rayon de coeur, profil d'indice, ouverture numérique), des conditions initiales d'injection de la source optique (angle solide et longueur d'onde d'émission, distance source-fibre, alignement axial et angulaire), du conditionnement de la ligne de transmission (parcours rectiligne ou courbe), et de la température ambiante. Dès lors, il est très difficile d'obtenir des distributions modales identiques d'un capteur à l'autre. Enfin, dans de tels guides optiques courbés, la réponse en température est directement liée à la distribution modale en entrée de fibre et il est admis que seules les premières longueurs de courbures contribuent efficacement à produire des pertes de transmission, les pertes se stabilisant en effet quasiment au delà d'une certaine longueur.

La présente invention a donc pour objet un capteur de température à fibre optique de faible encombrement présentant néanmoins une grande linéarité et une grande étendue de mesure, et agencé de façon à permettre son exploitation industrielle.

Ces buts sont atteints par un capteur de température à fibre optique comprenant une source optique pour délivrer un signal optique, une première ligne de transmission à fibre optique reliée à la source optique, une partie sensible de fibre optique reliée à la première ligne de transmission à fibre optique, une seconde ligne de transmission à fibre optique reliée à la partie sensible de fibre optique, et un circuit de détection optique et de traitement relié à la seconde ligne de transmission à fibre optique pour recevoir et analyser le signal optique transmis par la source optique et traversant la fibre optique, caractérisé en ce que ladite partie sensible de fibre optique est montée sur un support plan et courbée sur une longueur déterminée (N1) et avec une amplitude de courbure déterminée (A1). De préférence, la partie sensible est courbée périodiquement (T1).

Par cette structure particulièrement simple où la partie sensible de fibre optique est conformée selon un guide d'onde optique présentant des caractéristiques parfaitement déterminées, il est possible d'obtenir des mesures de température particulièrement précises. En outre, l'utilisation d'une fibre optique offre à un tel capteur une immunité totale vis à vis des perturbations d'origine électromagnétique ainsi qu'une sécurité totale en milieu sensible notamment explosif.

Dans une variante de réalisation, ce capteur de température à fibre optique peut être dépourvu d'une seconde ligne de transmission qui est alors remplacée par un élément réflectif plan relié directement à la partie sensible de fibre optique, laquelle est montée sur un support plan et courbée périodiquement (T1) sur une longueur déterminée (N1) et avec une amplitude de courbure déterminée (A1).

Selon la nature de la fibre optique utilisée pour former la partie sensible, la période de courbure T1 est choisie de façon à satisfaire soit l'inégalité suivante :

$$2\pi/T1 \geq 1/\rho^2 kn_1 + 2\sqrt{\Delta}/\rho \text{ pour une fibre à saut d'indice,}$$

soit l'égalité suivante :

$$T1 = \rho\pi \sqrt{(2/\Delta)} \text{ pour une fibre à gradient d'indice parabolique,}$$

où

$k = 2\pi/\lambda$ est le module du vecteur d'onde et $\lambda$ la longueur d'onde optique;
$n_1$ l'indice du matériau de coeur de la fibre optique;
$\Delta = n_1 - n_2/n_2$ est la différence relative des indices des matériaux de coeur et de gaine de la fibre optique, et
$\rho$ est le rayon de coeur de la fibre optique.

Selon un mode de réalisation préférentiel, la partie sensible de la fibre optique du capteur de température selon l'invention est précédée et suivie d'un tronçon de fibre, respectivement amont et aval, monté sur un support plan et courbé périodiquement (T2, T3) sur une longueur déterminée (N2, N3) et avec une amplitude de courbure déterminée (A2, A3). De préférence, ces longueurs déterminées des tronçons de fibres optiques amont et aval sont identiques.

Les périodes de courbure déterminées des tronçons de fibres optiques amont et aval sont déterminées de façon à obtenir un couplage optimal entre tous les modes de propagation guidés sans provoquer de couplages avec les modes rayonnants.

Avantageusement, la fibre optique est une fibre multimode et est constituée de matériaux de coeur et de gaines (dont une gaine externe) d'indices décroissants. Elle est entourée, au niveau de sa partie sensible, d'au moins une couche supplémentaire d'un matériau d'indice inférieur à l'indice de la gaine externe de la fibre et aux propriétés optiques vis à vis de la température différentes de celles du coeur de la fibre optique. Selon une première réalisation, la couche de matériau supplémentaire peut présenter un indice optique décroissant avec la température lorsque le matériau de coeur présente lui-même un indice optique constant ou croissant avec la température. Selon une seconde réalisation, cette couche de matériau supplémentaire peut présenter un indice optique croissant avec la température lorsque le matériau de coeur présente lui-même un indice optique constant ou décroissant avec la température.

De préférence, les première et seconde lignes de transmission à fibre optique sont entrelacées pour former un réseau de courbures de faible amplitude et de période déterminée. Cette période déterminée est choisie de manière à obtenir un couplage optimal entre les modes de propagation guidés, sans provoquer de couplages entre les modes rayonnants.

Avantageusement, la source optique est choisie parmi les trois sources suivantes : une source de lumière cohérente de type laser, une source de lumière partiellement cohérente de type diode superluminescente, ou une source de lumière faiblement cohérente de type diode luminescente.

Les première et seconde lignes de transmission à fibre optique et la partie sensible de fibre optique forment de préférence une fibre optique unique. Toutefois, ces première et seconde lignes de transmission à fibre optique peuvent aussi être formées de deux fibres optiques distinctes reliées par un guide d'onde optique formant la partie sensible de fibre optique.

La présente invention concerne également un dispositif de mesure de température muni de deux capteurs de température tels que décrits précédemment, ces deux capteurs disposés l'un près de l'autre étant alimentés par une source optique commune et délivrant chacun un signal optique de sortie au niveau respectivement d'un premier et d'un second détecteurs. Dans un premier mode de réalisation, la partie sensible de fibre optique de l'un de ces deux capteurs est rendue insensible à la température afin de permettre la délivrance au niveau du détecteur correspondant d'un signal de référence sensiblement constant avec la température. Dans un second mode de réalisation, les parties sensibles de fibre optique de ces deux capteurs ont des matériaux avec des coefficients de variation d'indice avec la température de signes opposés, afin de permettre la délivrance au niveau des premier et second détecteurs de signaux optiques ayant des variations opposées avec la température, la somme de ces deux signaux constituant un signal de référence sensiblement constant avec la température. Ce second mode de réalisation permet notamment d'obtenir une référence pour s'affranchir des grandeurs perturbatrices.

L'invention se rapporte également à un dispositif de mesure de température muni d'un premier capteur de température conforme à la structure précitée avec une source optique, une ligne de transmission aller, une partie sensible à boucle unique, une ligne de transmission retour et un premier détecteur, ce premier capteur étant destiné à coopérer avec un second capteur de température dont une partie sensible est disposée à proximité immédiate de la partie sensible du premier capteur, de manière à capter tout ou partie du flux lumineux radiatif émis au voisinage de la dite boucle unique et le diriger vers un second détecteur au moyen d'une ou plusieurs lignes optiques de transmission, les signaux optiques parvenant au niveau des premier et second détecteurs ayant des variations opposées avec la température. De ce fait, la somme pondérée de ces deux signaux peut constituer un signal de référence sensiblement constant avec la température. L'analyse des signes de variation des deux signaux détectés permet également de distinguer les effets propres à la température des autres effets perturbateurs. Ainsi, toute variation de même signe des deux signaux produits par les capteurs sera attribuée à des effets non liés à la grandeur à mesurer. C'est ce qui se passe lorsque le câble de transmission est soumis à des courbures provoquant une baisse simultanée de signal en sortie des deux capteurs. Ceci est également le cas lorsque l'intensité de la source fluctue. Après numérisation et traitement informatique des signaux, des corrections peuvent être apportées par action sur la source optique, sur les circuits d'amplification des signaux ou, mieux, en utilisant un algorithme approprié. Les deux signaux peuvent également être soumis à des opérateurs arithmétiques donnant un résultat de type ratiométrique. Ce résultat peut être obtenu en utilisant des opérateurs analogiques ou par traitement informatique.

Dans un premier mode de réalisation, la partie sensible du premier capteur et une fibre optique utilisée comme antenne réceptrice sont courbées sur un rayon voisin, les deux extrémités libres de la fibre réceptrice étant reliées via des lignes de transmission optiques à un second détecteur. Dans un second mode de réalisation, cette partie réceptrice du second capteur est de forme droite et disposée au plus près de la partie sensible du premier capteur, son extrémité opposée étant reliée à un second détecteur par l'intermédiaire d'une ligne optique de transmission.

Dans ces deux cas, le dispositif de mesure de température peut comporter en outre un dispositif optique additionnel inséré entre les parties sensibles de deux capteurs et faisant fonction de concentrateur de lumière, afin d'augmenter le rendement de transfert de la lumière du premier capteur vers le second capteur. Ce dispositif optique additionnel est formé avantageusement d'un matériau dont l'indice de réfraction est voisin de celui de la gaine optique recouvrant le coeur de la fibre du second capteur et légèrement supérieur à l'indice du matériau de gaine optique recouvrant le coeur du premier capteur. Dans le premier mode de réalisation précité, ce dispositif additionnel présente une forme en demi-anneau de faible section transversale, de manière à pouvoir s'insérer entre les deux parties sensibles courbées des premier et second capteurs. Dans le second mode de réalisation précité, il présente une forme en quadrant de cercle avec une base arrondie de même courbure que la partie sensible du premier capteur, et un sommet pointu venant en contact avec la partie sensible du second capteur.

Enfin, la présente invention trouve application avec un dispositif de mesure de température muni d'un capteur de température du type réflectif précité comportant une source optique, une ligne de transmission à fibre optique, une partie sensible de fibre optique, un élément réflectif plan et un premier détecteur, ce capteur comportant en outre un réseau de diffraction placé juste avant la partie sensible de la fibre optique pour faire rétroréfléchir comme signal de référence une partie du spectre du signal optique émis par la source optique, un élément diffractif plan disposé juste avant cette source optique permettant de diriger ce signal de référence vers un second détecteur et le signal optique de mesure étant dirigé vers le premier détecteur après avoir traversé également cet élément diffractif plan. De préférence, la source optique est de type spatialement cohérente telle une diode laser ou une diode superluminescente.

D'autres caractéristiques et avantages de la présente invention ressortiront mieux de la description suivante, faite à titre indicatif et non limitatif, en regard des dessins annexés, sur lesquels :

- la figure 1 est un premier exemple de réalisation d'un capteur optique de température selon l'invention;
- la figure 2 montre une variante de réalisation du capteur de la figure 1;
- la figure 3 montre un premier exemple de configuration de mesure intégrant le capteur de la figure 1;
- la figure 4 montre un deuxième exemple de configuration de mesure intégrant le capteur de la figure 1;
- la figure 5 détaille la partie sensible du capteur optique de la figure 4;
- la figure 6 montre un troisième exemple de configuration de mesure intégrant le capteur de la figure 1;
- la figure 7 montre la partie sensible du capteur optique de la figure 6;
- la figure 8 est un second exemple de réalisation d'un capteur optique selon l'invention;
- la figure 9 montre une variante de réalisation du capteur optique de la figure 8, et
- la figure 10 montre un quatrième exemple de configuration de mesure intégrant le capteur de la figure 8.

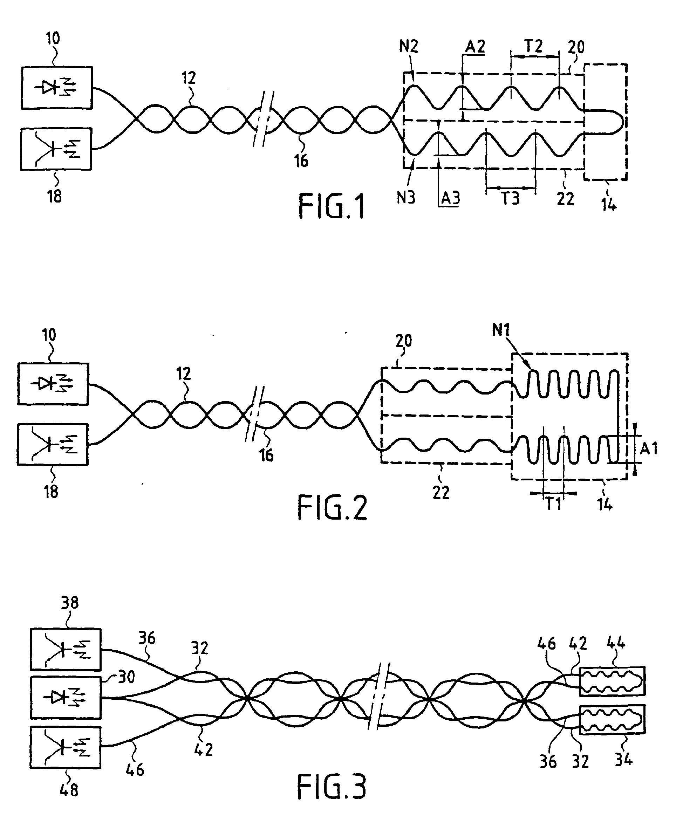

Un premier exemple de réalisation d'un capteur de température selon l'invention est illustré sur la figure 1. Ce capteur comporte une source optique 10, une ligne de transmission aller à fibre optique 12, une partie sensible de fibre optique 14, une ligne de transmission retour à fibre optique 16 et un circuit de détection et de traitement 18. Les lignes de transmission aller et retour et la partie sensible sont formées avantageusement dans une fibre optique unique. Toutefois, ces lignes de transmission peuvent aussi être formées de deux fibres optiques distinctes reliées à la partie sensible formée alors par un guide d'onde optique.

La source optique 10 d'émission d'un signal optique peut être une source de lumière cohérente spatialement de type laser, ou simplement partiellement cohérente de type diode superluminescente, ou même faiblement cohérente de type diode luminescente.

La ligne de transmission aller 12 est constituée par une fibre optique multimode rendue intrinsèquement peu sensible à la température du fait de la sensible égalité (en amplitude et signe) des coefficients de variation d'indice avec la température des matériaux de coeur et de gaine constitutifs de cette fibre optique. Cette condition est notamment vérifiée avec une fibre classique dite « toute silice » dont les matériaux de coeur et de gaine sont formés par un même matériau. De préférence, afin d'assurer une meilleure excitabilité modale et de s'affranchir au mieux des conditions d'injection au niveau de la source optique, cette fibre est choisie du type à gradient d'indice parabolique. Toutefois, l'emploi d'une fibre à saut d'indice peut aussi être envisagée. De même, afin d'éviter l'utilisation de connecteurs optiques ou de coupleurs à lentilles qui présentent l'inconvénient d'une mauvaise reproductibilité lors de leur démontage/remontage, une extrémité de cette ligne de transmission est fixée solidairement à la source optique 10, par exemple par collage ou à l'issue d'un processus de fusion, et éventuellement au travers d'un dispositif de collimation (non représenté).

La ligne de transmission retour 16 présente une configuration analogue à celle de la ligne aller, une extrémité de cette ligne étant alors fixée solidairement à l'élément de détection 18, éventuellement au travers d'un dispositif de focalisation (non représenté).

Avantageusement, les deux lignes de transmission aller et retour sont entrelacées l'une par rapport à l'autre de manière à former un réseau de courbures de faible amplitude (pour limiter les pertes dues aux modes rayonnants de la fibre) et de période choisie pour que l'ensemble des modes de propagation guidés par la fibre optique soient excités. On réalise ainsi un couplage optimal de ces modes guidés et on parle alors de distribution modale d'équilibre. L'ensemble source-ligne de transmission aller et élément de détection-ligne de transmission retour peut être monté dans un boîtier et ensuite être soudé et fixé à une carte électronique de traitement commune.

Le circuit de détection et de traitement 18 comporte un élément photodétecteur optoélectronique de conversion du signal optique reçu en un signal électrique (par exemple un phototransistor ou une photodiode) et des éléments de traitement électronique de ce signal pour en déduire la température à évaluer. Bien entendu, comme il sera vu plus avant, un référençage du capteur sera réalisé au niveau de ces éléments de traitement pour s'affranchir des différentes grandeurs perturbatrices susceptibles de perturber les mesures comme les effets de courbures sur les lignes de transmission, les diverses fluctuations d'origines thermiques ou les variations de température non désirées dans les lignes de transmission par exemple.

La partie sensible de fibre optique 14 destinée à assurer la mesure de température par contact ou immersion dans le milieu à surveiller est conformée en guide d'onde optique multimode et disposée selon un réseau de courbures de structure plane à contraintes de déformations nulles.

La constante de propagation d'un mode $\beta$ dans une fibre optique multimode quelconque, définie par ses deux paramètres entiers $\mu$ et $\nu$ décrivant respectivement la dépendance radiale et azimutale du champ électromagnétique qui lui est associé, répond à l'équation suivante :

$$\beta_{\mu,\nu} = kn_1 \; [1-2\Delta[\alpha+2/\alpha \; * \; (2\mu+\nu)/(\rho^2 k^2 n_1^2 \lambda)]^{\alpha/\alpha+2}]^{0.5}$$

où

k = $2\pi/\lambda$ est le module du vecteur d'onde et $\lambda$ la longueur d'onde optique;
$n_1$ l'indice du matériau de coeur de la fibre optique;
$\Delta=n_1-n_2/n_2$ est la différence relative des indices des matériaux de coeur et de gaine de la fibre optique;
$\alpha$ est un coefficient qui défini le profil spatial de l'indice de réfraction de la fibre ($\alpha$= 2 correspond à une fibre à gradient d'indice parabolique), et
$\rho$ est le rayon de coeur de la fibre optique.

Les conditions aux limites imposées aux modes de propagation guidés dans la fibre doivent satisfaire la relation :

$$0 < (2\mu+\nu)^2 < \Delta(\rho k n_1)^2 \, \alpha/\alpha+2$$

La présence d'un défaut présentant une périodicité T telle que :

$$\Delta\beta=2\pi/T$$

peut coupler deux modes ou groupes de modes satisfaisant à la règle de sélection liée au couplage du plus proche voisin.

Ainsi, pour une fibre à saut d'indice ($\alpha \rightarrow \infty$), l'espacement entre les modes voisins est donné par :

$$\Delta\beta_{(\mu,\nu)(\mu,\nu+1)} = 1/(\rho k n_1)^2 \; [1+2(2\mu+\nu)]$$

d'après les bornes des modes guidés :

$$1/\rho^2 k n_1 \leq \Delta\beta \leq 1/\rho^2 k n_1 + 2\sqrt{\Delta}/\rho$$

Ainsi, si un défaut mécanique périodique de fréquence $2\pi/T$ est appliqué à une fibre optique à saut d'indice, il peut être observé :

- soit aucun couplage si :

$$2\pi/T \leq 1/\rho^2 k n_1$$

- soit un couplage entre les seuls modes guidés si :

$$1/\rho^2 k n_1 \leq 2\pi/T \leq 1/\rho^2 k n_1 + 2\sqrt{\Delta}/\rho \qquad (1)$$

- soit un couplage entre modes guidés et modes rayonnants si :

$$2\pi/T \geq 1/\rho^2 k n_1 + 2\sqrt{\Delta}/\rho \qquad (2)$$

Dans le cas d'une fibre optique à gradient d'indice parabolique ($\alpha = 2$), l'espacement entre modes est indépendant de leur ordre. Ainsi, tout défaut de période T couplera l'ensemble des modes de propagation guidés et rayonnants avec une intensité liée notamment à l'amplitude de ce défaut (l'adoption de pas de microcourbures multiples de T permet également d'obtenir des pics d'atténuation) :

$$\Delta\beta_{(\mu,\nu)(\mu,\nu+1)} = 2\pi/T = \sqrt{(2\Delta)}/\rho$$

soit encore

$$T = \rho\pi \sqrt{(2/\Delta)} \qquad (3)$$

où
$\Delta = n_1 - n_2/n_2$ est la différence relative des indices des matériaux de coeur et de gaine de la fibre optique, et $\rho$ est le rayon de coeur de la fibre optique.

L'application des relations (2) ou (3) permet de définir la période des microcourbures T1 et l'amplitude des déformations du réseau A1 en fonction de la sensibilité et de l'étendue de mesure recherchées. Le nombre N1 de périodes du réseau est essentiellement défini par la surface de contact disponible avec le milieu à surveiller. Au minimum, notamment dans le cas d'une mesure ponctuelle comme illustré à la figure 1, ce nombre pourra être inférieur à l'unité, une demi-période pouvant alors suffire pour réaliser la partie sensible du capteur et obtenir une demi-boucle de retour nécessaire à la liaison avec la ligne de transmission retour. La figure 2 est un autre exemple de capteur dans lequel la partie sensible comporte six périodes, les tronçons amont et aval ayant chacun trois périodes.

Deux techniques de réalisation de la partie sensible de la fibre optique sont actuellement envisageables. Une première technique connue consiste à créer un guide d'onde optique spécifique en intégrant directement la fibre optique dans un substrat de silicium ou de verre conformé préalablement. La seconde technique utilise un processus thermique de mise en forme de la fibre optique. Ce processus peut être inséré soit dans le cycle de fabrication de la fibre soit lors de l'élaboration de la partie sensible du capteur. Dans ce dernier cas, la fibre est dénudée sur une certaine longueur de son revêtement mécanique et éventuellement de sa ou ses gaines optiques puis fixé sur un support plan muni de courbures préétablies. L'ensemble est ensuite porté à une température suffisante pour assurer un ramollissement des matériaux puis, une fois que la fibre a pris sa forme microcourbée, cette partie dénudée est revêtue d'une ou plusieurs couches de matériaux d'indice décroissants, optiquement compatibles avec l'indice du coeur de la fibre, mais présentant des propriétés de variations vis à vis de la température qui sont différentes de celles du coeur. De préférence, un dernier matériau pouvant aussi faire office de boîtier donnera à la partie sensible du capteur sa résistance et sa tenue mécanique définitive.

On aura noté que ce procédé de mise en forme permet d'obtenir une fibre optique microcourbée à contraintes de déformations nulles, ce qui garantit une longue durée de vie pour le capteur comme son affranchissement des effets élasto-optiques.

Selon une caractéristique préférentielle de l'invention, la partie sensible de fibre optique 16 est précédée et suivie par deux tronçons identiques de fibre optique 20, 22 rendus insensibles à la température et disposés également sur un support plan selon un réseau déterminé de courbures. Le rôle du premier tronçon, ou tronçon aller, est d'optimiser la distribution modale pour obtenir une distribution modale d'équilibre en entrée de la partie sensible et le rôle du second tronçon, ou tronçon retour, est de reconstituer cette distribution modale d'équilibre en sortie de cette partie sensible. Ainsi, il est possible de garantir un comportement identique des lignes de transmission aller et retour et donc une meilleure reproductibilité de réponse du capteur.

La période T2, T3 est fixée à partir de la relation (1) en égalant les termes du milieu et de droite de cette inégalité assurant ainsi un couplage optimal (sans pertes) entre tous les modes de propagation guidés dans la fibre sans provoquer de couplages avec les modes rayonnants. Toutefois, une telle égalité ne pouvant être parfaite, il peut s'opérer tout de même un couplage avec les modes rayonnants, d'où la nécessité de prévoir une valeur d'amplitude correspondante A2, A3 suffisamment faible pour limiter les pertes. Le nombre N2, N3 de périodes est choisi comme précédemment en fonction de la surface de contact disponible.

Le fonctionnement du capteur de température selon l'invention est basé sur le principe de la modulation d'intensité (dite aussi d'amplitude) dans une fibre optique. Il repose sur la mesure de la puissance recueillie en sortie de la fibre optique qui est fonction des variations d'ouverture numérique (ON) par effets thermiques.

Ainsi, la mesure de température peut mettre en oeuvre deux principes complémentaires : le premier résulte d'une modulation positive de l'ouverture numérique de la fibre optique et le second, inverse, résulte d'une modulation négative de cette ouverture. Le choix de l'un ou l'autre de ces deux modes de fonctionnement dépendra essentiellement du choix qui sera opéré pour les matériaux composant la partie sensible de la fibre optique, plus précisément pour les coefficients de variation en fonction de la température (en valeur et en signe) des indices du coeur et de la ou des gaines optiques de la fibre.

Dès lors, pour obtenir une modulation positive de l'ouverture numérique, il suffit de choisir pour le coeur de la partie sensible de la fibre optique un matériau optiquement transmissif et présentant un indice constant ou croissant avec la température (par exemple la silice) alors que, pour les gaines optiques et notamment la gaine la plus externe, il suffit de choisir un matériau d'indice optique compatible avec le coeur mais décroissant avec la température (par exemple le silicone). Dans ce mode de fonctionnement du capteur, une augmentation de la température entraînera une augmentation de l'ouverture numérique, la valeur minimale du signal optique correspondant à son extinction étant obtenue pour la température de fonctionnement la plus basse. Par contre, pour obtenir une modulation négative de l'ouverture numérique, on choisira des matériaux aux propriétés optiques inverses des précédentes. Dans ce mode de fonctionnement, une augmentation de la température entraînera une diminution de l'ouverture numérique, la température de fonctionnement la plus basse permettant alors d'obtenir la valeur maximale du signal optique correspondant à sa saturation.

Ces deux températures limites définissent l'étendue de mesure du capteur à l'intérieur de laquelle la réponse du capteur peut être considérée comme linéaire en fonction de la température. On notera qu'un calcul de ces deux limites inférieure et supérieure de température peut être effectué simplement et très classiquement à partir de la détermination de l'angle de réfraction limite d'une fibre courbée qui peut s'exprimer en fonction du rayon de courbure de cette fibre et de l'angle de réfraction limite d'une fibre rectiligne.

Bien entendu, avant toute utilisation, il conviendra de procéder à un calibrage du capteur afin de limiter les erreurs de mesure liées classiquement à la dispersion des caractéristiques des composants utilisés dans la fabrication de la fibre optique et à leurs fluctuations temporelles. Un processus simple d'étalonnage pourra ainsi être mis en oeuvre au moment de l'installation du capteur dans le milieu à surveiller, par exemple en procédant à une mesure pour une température de référence donnée à laquelle correspond une réponse étalon du capteur.

En outre, afin de s'affranchir valablement des variations du signal recueilli autres que celles liées à la température, il est classique de procéder à un référençage du capteur. Sa fonction est de détecter les variations de signal liées à des grandeurs perturbatrices autres que l'effet de température à mesurer, par exemple les effets de courbures sur les lignes de transmission, la pression ou les déformations thermiques des matériaux.

La figure 3 illustre un premier exemple d'un dispositif de mesure de température en résultant avec deux structures identiques à celle du capteur de température défini précédemment et alimentées par une source optique commune 30. On rappellera que ce capteur comporte, outre cette source optique commune, une première ligne de transmission aller 32, une première partie sensible 34, une première ligne de transmission retour 36, un premier détecteur 38. Il est adjoint à ce premier capteur un second ayant une seconde ligne de transmission aller 42 fixé solidairement à la source optique commune 30, une seconde partie sensible 44, une seconde ligne de transmission retour 46 et un second détecteur 48. En outre, l'ensemble des lignes de transmission est conformé selon un entrelacement périodique des fibres optiques de manière à conserver en tout point de ces lignes des distributions modales identiques.

Dans une première variante de réalisation, la seconde partie sensible 44 qui est, comme les lignes de transmission 32, 36 ; 42, 46, rendue intrinsèquement insensible à la température, constitue un capteur de référence pour la mesure qui est effectuée avec la première partie sensible 34 (laquelle est placée dans le milieu à surveiller). Ainsi, avec cette configuration, toutes les variations (grandeurs perturbatrices) autres que celles résultant de la température qui agiront pareillement sur chacune des deux structures de capteur pourront être annulées au moyen d'une boucle de contre-réaction (non représentée) appliquée à la source optique. En sortie des deux détecteurs du dispositif de mesure seront disponibles d'une part un signal de mesure, et d'autre part un signal de référence sensiblement constant avec la température.

Dans une seconde variante de réalisation, les première et seconde parties sensibles 34, 44 sont positionnées aussi près que possible l'une de l'autre dans le milieu à surveiller, mais les fibres optiques les composant sont choisies avec des matériaux ayant des coefficients de variation d'indice avec la température de préférence de même amplitude mais de signes opposés. Un choix adéquat des rayons de courbure et des gains d'amplification pour les deux capteurs permettront de compenser les différences inhérentes aux matériaux et d'obtenir une étendue de mesure linéaire. En sortie des détecteurs seront disponibles un premier signal de mesure croissant avec la température (fonctionnement en modulation positive) et un second signal de mesure décroissant avec la température (fonctionnement en modulation négative), la somme de ces deux signaux constituant un signal de référence sensiblement constant avec la température. Comme précédemment, l'analyse des signes de variation des deux signaux de mesure couplée avec une boucle de contre-réaction permettra de discriminer les effets de la température de ceux des autres grandeurs perturbatrices. En effet, toute variation de même signe des deux signaux sera attribuée à des effets non liés à la température, ce qui est par exemple le cas lorsque les lignes de transmission sont soumises à des courbures provoquant une baisse du signal en sortie de la fibre optique

ou lorsque l'intensité de la source optique fluctue.

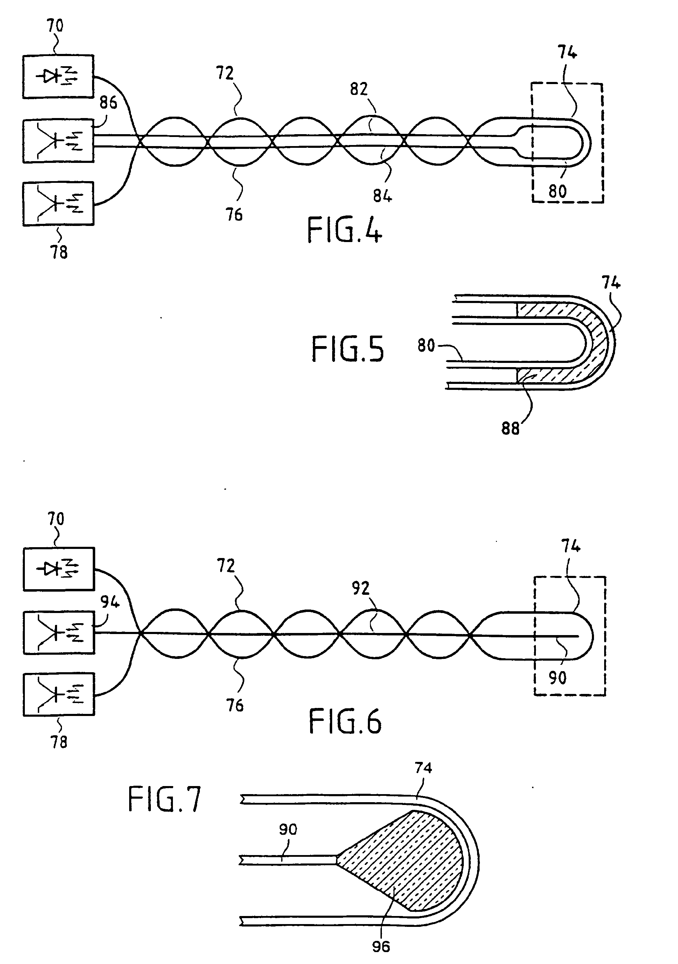

Les figures 4 et 6 montrent des deuxième et troisième exemples de dispositif de mesure de température intégrant d'une part un premier capteur présentant une structure identique à celles illustrées précédemment, mais dans une version à boucle unique (comme illustré sur la figure 1), et d'autre part un second capteur destiné à coopérer avec le premier pour s'affranchir des effets autres que des effets de la température. Le premier capteur à fibre optique comporte une source optique 70, une ligne de transmission aller 72, une partie sensible présentant une boucle unique 74, une ligne de transmission retour 76 et un premier détecteur 78. L'ensemble des lignes de transmission aller et retour est conformé selon un entrelacement périodique des fibres optiques de manière à conserver en tout point de ces lignes des distributions modales identiques. Ce premier capteur est de type capteur microcourbé à modulation positive avec un premier signal croissant avec la température. Le second capteur est formé aussi par une fibre optique dont une portion sensible est disposée à proximité immédiate de la partie sensible du premier capteur de manière à capter tout ou partie du flux lumineux radiatif émis au voisinage de la courbure de la boucle unique. Ce second capteur fonctionne suivant le principe d'une antenne chargée de capter l'énergie lumineuse perdue par le premier capteur. La fibre optique utilisée comme antenne est rendue intrinsèquement insensible aux effets de la température et n'est excitée par aucun signal optique en dehors de celui émis par la partie sensible et courbée de la première fibre optique. Le signal capté est ensuite transporté, au moyen d'une ou plusieurs lignes optiques de transmission, vers un second détecteur.

Dans la configuration de la figure 4, les fibres émettrice (la partie sensible du premier capteur 74) et réceptrice (la partie sensible du second capteur 80) sont courbées sur un rayon voisin. Les deux extrémités libres de la fibre réceptrice sont reliées via des lignes de transmission 82, 84 à un second détecteur 86. Selon une première réalisation avantageuse, les coeurs des deux fibres baignent dans un matériau jouant un rôle de gaine optique commune. Le transfert de lumière de l'une vers l'autre se fait par diffusion à travers ce matériau optiquement actif dont l'indice de réfraction est légèrement inférieur aux indices du coeur des deux fibres. Selon une autre réalisation préférentielle, un dispositif additionnel peut être inséré entre les deux fibres dans le but d'augmenter le rendement de transfert de lumière du premier capteur vers le second capteur, en collectant et concentrant la lumière diffusée par le matériau. Ce dispositif joue également un rôle d'isolant de telle sorte que la fibre réceptrice puisse conserver son ouverture numérique propre qui est indépendante des effets de la température. Cette disposition particulière permet d'obtenir des variations de signaux proportionnelles entre les deux capteurs.

Sous sa forme la plus simple, et comme l'illustre la figure 5, le matériau constitutif de ce dispositif optique additionnel peut être du type verre avec un indice voisin de celui de la gaine optique recouvrant le coeur de la fibre du second capteur et légèrement supérieur à l'indice du matériau de gaine optique recouvrant le coeur du premier capteur. Il possède ainsi une forme en demi-anneau 88 de faible section transversale, de telle manière à pouvoir s'insérer entre les parties sensibles courbées des deux capteurs 74, 80.

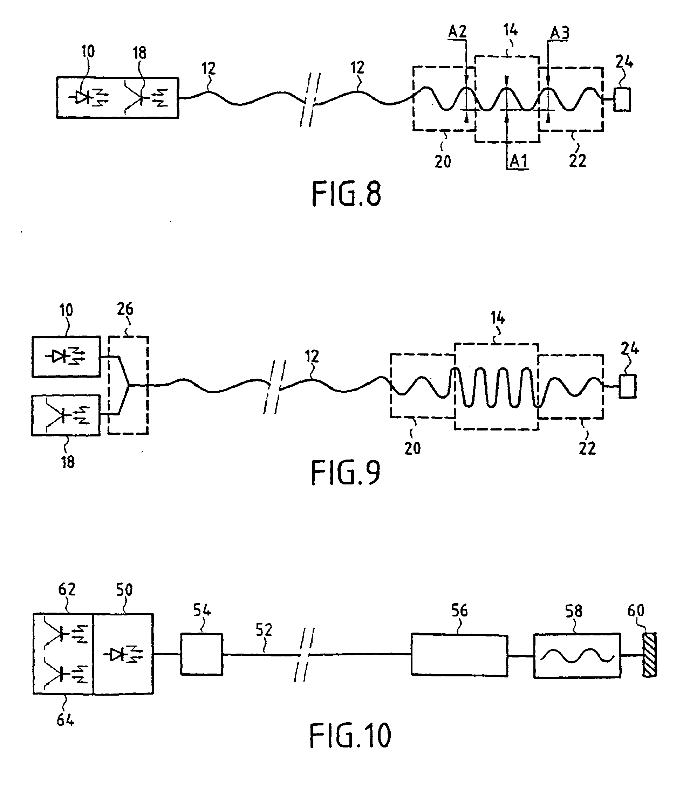

Dans la configuration de la figure 6, la fibre réceptrice (la partie sensible du second capteur 90) est de forme droite et disposée au plus près de la fibre émettrice (la partie sensible du premier capteur 74). Son extrémité opposée est reliée à un second détecteur 94 par l'intermédiaire d'une ligne de transmission 92. De même, un dispositif additionnel jouant un rôle de concentrateur et d'isolateur est prévu entre les deux fibres. Les propriétés optiques du matériau constitutif de ce dispositif optique additionnel sont de même nature que les précédentes mais sa forme géométrique, illustrée à la figure 7, est toutefois différente. Elle présente en effet, dans cette seconde configuration, une forme en quadrant de cercle 96 avec une base arrondie de même courbure que la partie sensible du premier capteur 74 et un sommet pointu venant en contact avec la partie sensible du second capteur 90.

Comme dans la configuration de la figure 3, on dispose toujours en sortie des deux détecteurs 78 ; 86, 94 de deux signaux variant en sens contraire avec la température. De ce fait, la somme pondérée de ces deux signaux peut constituer un signal de référence sensiblement constant avec la température. D'autre part, lorsque la température augmente, les pertes du signal optique, produites autour de la partie sensible courbée du premier capteur, décroissent, entraînant une augmentation du signal de sortie du premier capteur et une diminution du signal de sortie du second capteur. Les signaux issus des deux capteurs sont fortement corrélés et permettent après traitement (analogique ou numérique) de discriminer l'effet propre de la température des autres effets. Ainsi, lors d'une fluctuation de l'énergie émise par la source optique 70, on aura simultanément soit une augmentation, soit une diminution des deux signaux de sortie des deux capteurs. Le résultat est identique en cas de déformations mécaniques des lignes de transmission optique.

Plus particulièrement, dans le cas d'un traitement analogique, les deux signaux sont soumis à des opérateurs arithmétiques donnant un résultat de type ratiométrique. Dans le cas d'un traitement numérique, ces signaux sont préalablement envoyés vers un convertisseur analogique/numérique, un microcontrôleur étant ensuite programmé pour apporter des corrections par action sur la source ou sur les détecteurs ou au moyen d'un algorithme approprié.

La figure 8 montre un second exemple de réalisation d'un capteur de température à fibre optique selon l'invention dans une configuration en réflexion. On retrouve dans ce capteur la source optique avec sa diode émettrice 10, la ligne de transmission aller à fibre optique 12 dont une extrémité est fixée solidairement à cette source optique, la partie sensible de la fibre optique 14 qui prolonge la ligne de transmission et qui est intercalée entre les deux tronçons de fibre 20, 22 et le circuit de détection et de traitement comportant une cellule photodétectrice 18 et qui, dans cette configuration, peut être intégré à la source optique (une séparation de la diode émettrice et de la cellule photodétectrice est bien évidemment possible moyennant le recours à un coupleur 27 ou tout autre dispositif séparateur comme l'illustre la figure 9). Par contre, la ligne de transmission retour est absente de cette configuration et est remplacée par un élément réfléchissant plan, par exemple un miroir 24.

Cette configuration de capteur qui permet de diminuer l'encombrement général du capteur ainsi que les pertes de transmission liées à la ligne retour autorise, bien entendu, des modes de fonctionnement identiques à ceux décrits précédemment en regard de la figure 1.

Un dispositif de référençage particulièrement bien adapté à cette configuration en réflexion est maintenant décrit en regard de la figure 10. Une source optique 50 spatialement cohérente (laser ou diode superluminescente) est utilisée pour injecter un signal optique dans la ligne de transmission à fibre optique 52 au travers d'un élément optique diffractif plan 54. Un réseau de diffraction (par exemple réseau de Bragg 56) placé juste avant la partie sensible de la fibre optique 58 fait rétroréfléchir une partie du spectre du signal optique émis qui, insensible à la température, sert alors de signal de référence. La partie du signal optique transmise par le réseau de diffraction va parcourir deux fois la partie sensible 58 du fait de la présence du miroir 60. Le signal de retour de spectre différent du premier empruntera ensuite le même chemin que le signal de référence. Juste avant la source optique 50, l'élément optique diffractif 54 permettra de discriminer les deux signaux optiques de mesure et de référence, chacun étant détecté par un détecteur distinct 62, 64.

Le capteur à fibre optique selon l'invention présente de très nombreux avantages. Citons, par exemple, une très grande linéarité, une importante étendue de mesure dans une plage de température de -200 à 1000°C, une très grande résolution de l'ordre de $10^{-4}$°C, une très grande durée de vie, une sensibilité régulièrement répartie du fait du rétablissement constant des distributions modales, un encombrement très faible, une fixation particulièrement aisée de par la structure plane de la partie sensible, une bonne reproductibilité, un coût de production modéré et une facilité de mise en oeuvre.

Notons encore que cette structure est particulièrement bien adaptée dans le cas où l'on cherche à déterminer une valeur moyenne de température à partir de différentes zones du milieu à surveiller. Il suffit en effet de placer une partie sensible sur chacune de ces zones et de les relier entres elles par des lignes de transmission, une source optique et un détecteur étant suffisant pour assurer l'émission et la réception du signal optique traversant ce réseau de capteurs.

**Revendications**

1. Capteur de température à fibre optique comprenant une source optique (10, 30) pour délivrer un signal optique, une partie sensible de fibre optique (14, 34), un circuit de détection optique et de traitement (18, 38) pour recevoir et analyser le signal optique émis par la source optique et traversant la partie sensible, et au moins une ligne de transmission à fibre optique (12, 32) pour relier la partie sensible (14, 34) à la source optique (10, 30) et au circuit de détection et de traitement (18, 38), ladite partie sensible de la fibre optique étant disposée selon un réseau d'au moins une courbure de structure plane sur une longueur déterminée (N1) et avec une amplitude de courbure déterminée (A1), **caractérisé en ce que** la ou chaque ligne de transmission est constituée d'un coeur et d'au moins une gaine optique externe, les indices optiques du coeur et de la au moins une gaine optique étant décroissants, les coefficients de variation des indices optiques avec la température étant sensiblement égaux en amplitude et en signe, et **en ce que** la partie sensible est conformée selon un tronçon de fibre optique entouré d'au moins une couche supplémentaire d'un matériau d'indice inférieur à l'indice de la ou des gaines optiques et qui varie en fonction de la température en sens inverse de l'indice optique du coeur de la partie sensible (14, 34), de façon à rendre ladite partie (14, 34) sensible à la température par modulation positive ou négative de son ouverture numérique locale.

2. Capteur de température à fibre optique comprenant une source optique (10, 30) pour délivrer un signal optique, une partie sensible de fibre optique (14, 34), un circuit de détection optique et de traitement (18, 38) pour recevoir et analyser le signal optique émis par la source optique et traversant la partie sensible, et au moins une ligne de transmission à fibre optique (12, 32) pour relier la partie sensible (14, 34) à la source optique (10, 30) et au circuit de détection et de traitement (18, 38), ladite partie sensible de la fibre optique étant disposée selon un réseau d'au moins une courbure de structure plane sur une longueur déterminée (N1) et avec une amplitude de courbure déterminée (A1), **caractérisé en ce que** cette partie sensible comprend un tronçon de fibre optique dépourvu de sa ou ses gaines optiques et entouré d'au moins une couche de matériau d'indice inférieur à l'indice de la ou des gaines optiques et qui varie en fonction de la température en sens inverse de l'indice optique du coeur de la partie sensible (14, 34), la ou chaque ligne de transmission étant constituée d'un coeur et d'au moins une gaine optique externe, les indices optiques du coeur et de la au moins une gaine optique étant décroissants, les coefficients de variation des indices optiques avec la température étant sensiblement égaux en amplitude et en signe.

3. Capteur de température selon l'une quelconque des revendications 1 ou 2, **caractérisé en ce qu'**une seconde ligne de transmission optique (16, 36) reliée à la partie sensible (14, 34) est également reliée au circuit de détection optique et de traitement (18, 38).

4. Capteur de température selon l'une quelconque des revendications 1 ou 2, **caractérisé en ce qu'**un élément réflectif plan (24) est relié à la partie sensible de fibre optique (14, 34), le circuit de détection optique et de traitement (18, 38) étant également relié à la ligne de transmission à fibre optique (12, 32) pour recevoir et analyser le signal optique émis par la source optique (10) et traversant la partie sensible (14, 34) avant et après réflexion par l'élément réflectif.

5. Capteur de température selon l'une quelconque des revendications 1 à 4, **caractérisé en ce que** ladite partie sensible de fibre optique est courbée périodiquement (T1).

6. Capteur de température selon l'une quelconque des revendications 1 à 5, **caractérisé en ce que** ladite couche de matériau supplémentaire présente un indice optique décroissant avec la température lorsque le matériau de coeur présente lui-même un indice optique constant ou croissant avec la température.

7. Capteur de température selon l'une quelconque des revendications 1 à 5, **caractérisé en ce que** ladite couche de matériau supplémentaire présente un indice optique croissant avec la température lorsque le matériau de coeur présente lui-même un indice optique constant ou décroissant avec la température.

8. Capteur de température selon l'une quelconque des revendications 5 à 7 dont la partie sensible est à saut d'indice, **caractérisé en ce que** ladite période de courbure est choisie de façon à satisfaire à l'inégalité suivante :

$$2\pi/T1 \geq 1/\rho^2 kn_1 + 2\sqrt{\Delta}/\rho$$

où

k = $2\pi/\lambda$ est le module du vecteur d'onde et $\lambda$ la longueur d'onde optique;

$n_1$ l'indice de réfraction du matériau de coeur de la fibre optique;

$n_2$ l'indice de réfraction du matériau de gaine de la fibre optique;

$\Delta = n_1 - n_2/n_1$ est la différence relative des indices de réfraction des matériaux de coeur et de gaine de la fibre optique, et

$\rho$ est le rayon de coeur de la fibre optique.

**9.** Capteur de température selon l'une quelconque des revendications 5 à 7 dont la partie sensible est à gradient d'indice parabolique, **caractérisé en ce que** ladite période de courbure est choisie de façon à satisfaire à l'égalité suivante (ou des valeurs multiples de cette égalité) :

$$T1 = \rho\pi \sqrt{(2/\Delta)}$$

où

$\Delta = n_1 - n_2/n_1$ est la différence relative des indices des matériaux de coeur $n_1$ et de gaine $n_2$ de la fibre optique, et $\rho$ est le rayon de coeur de la fibre optique.

**10.** Capteur de température selon l'une quelconque des revendications 1 ou 2, **caractérisé en ce que** ladite partie sensible de la fibre optique est précédée et suivie d'un tronçon de fibre, respectivement amont et aval (20, 22), intrinsèquement insensible à la température et disposé selon un réseau de courbures périodiques (T2, T3) fixées à partir de la relation:

$$1/\rho^2 kn_1 \leq 2\pi/T \leq 1/\rho^2 kn_1 + 2\sqrt{\Delta}/\rho$$

où

k = $2\pi/\lambda$ est le module du vecteur d'onde et $\lambda$ la longueur d'onde optique;

$n_1$ l'indice de réfraction du matériau de coeur de la fibre optique;

$n_2$ l'indice de réfraction du matériau de gaine de la fibre optique;

$\Delta = n_1 - n_2/n_1$ est la différence relative des indices de réfraction des matériaux de coeur et de gaine de la fibre optique, et

$\rho$ est le rayon de coeur de la fibre optique,

le réseau de courbures périodiques présentant une structure plane sur une longueur (N2, N3) définie par la surface de contact disponible avec le milieu à surveiller et avec une amplitude de courbure (A2, A3) suffisamment faible pour limiter les pertes.

**11.** Capteur de température selon la revendication 10, **caractérisé en ce que** lesdites longueurs déterminées des tronçons de fibres optiques amont et aval sont identiques.

**12.** Capteur de température selon la revendication 10, **caractérisé en ce que** lesdites périodes de courbure déterminées des tronçons de fibres optiques amont et aval sont déterminées à partir de la relation $1/\rho^2 kn_1 \leq 2\pi/T \leq 1/\rho^2 kn_1 + 2\sqrt{\Delta}/\rho$ en égalant les termes du milieu et de la droite de cette inégalité, assurant ainsi un couplage optimal entre tous les modes de propagation guidés sans provoquer de couplages avec les modes rayonnants.

**13.** Capteur de température selon l'une quelconque des revendications 1 à 12, **caractérisé en ce que** la ou chaque ligne de transmission à fibre optique et la partie sensible de fibre optique forment une fibre optique unique.

**14.** Capteur de température selon la revendication 13, **caractérisé en ce que** ladite partie sensible est constituée par une fibre multimode.

**15.** Capteur de température selon la revendication 1, **caractérisé en ce qu'**il comprend une première et une seconde lignes de transmission à fibre optique qui sont entrelacées pour former un réseau de courbures de faible amplitude et de période déterminée.

16. Capteur de température selon la revendication 15, **caractérisé en ce que** ladite période déterminée est choisie à partir de la relation

$$1/\rho^2 kn_1 \leq 2\pi/T \leq 1/\rho^2 kn_1 + 2\sqrt{\Delta}/\rho$$

où

$k = 2\pi/\lambda$ est le module du vecteur d'onde et $\lambda$ la longueur d'onde optique;
$n_1$ l'indice de réfraction du matériau de coeur de la fibre optique;
$n_2$ l'indice de réfraction du matériau de gaine de la fibre optique;
$\Delta = n_1 - n_2/n_1$ est la différence relative des indices de réfraction des matériaux de coeur et de gaine de la fibre optique, et
$\rho$ est le rayon de coeur de la fibre optique,

en égalant les termes du milieu et de la droite de cette inégalité, de manière à obtenir un couplage optimal entre l'ensemble des modes de propagation guidés sans provoquer de couplage avec les modes rayonnants.

17. Capteur de température selon l'une quelconque des revendications 1 ou 2, **caractérisé en ce que** ladite source optique est choisie parmi les trois sources suivantes : une source de lumière cohérente de type laser, une source de lumière partiellement cohérente de type diode superluminescente ou une source de lumière faiblement cohérente de type diode luminescente.

18. Capteur de température selon la revendication 1, **caractérisé en ce que** ladite source optique est fixée solidairement à une extrémité d'une première ligne de transmission à fibre optique (12, 32, 42) et ledit élément de détection est fixé solidairement à une extrémité d'une seconde ligne de transmission à fibre optique (16, 36, 46).

19. Capteur de température selon l'une quelconque des revendications 1 ou 2, **caractérisé en ce que** la fibre optique microcourbée est à contraintes de déformations nulles.

20. Dispositif de mesure de température muni d'un premier capteur de température selon la revendication 1 et d'un second capteur disposé près du premier, ces deux capteurs disposés l'un près de l'autre étant alimentés par une source optique commune (30) et délivrant chacun un signal optique de sortie au niveau respectivement d'un premier et d'un second détecteurs, une partie de fibre optique (44) de l'un de ces deux capteurs étant insensible à la température afin de permettre la délivrance au niveau du détecteur correspondant (48) d'un signal de référence sensiblement constant avec la température.

21. Dispositif de mesure de température muni de deux capteurs de température selon la revendication 1, ces deux capteurs disposés l'un près de l'autre dans le milieu à surveiller étant alimentés par une source optique commune (30) et délivrant chacun un signal optique de sortie au niveau respectivement d'un premier et d'un second détecteurs, les parties sensibles de fibre optique (34, 44) de ces deux capteurs ayant des matériaux avec des coefficients de variation d'indice avec la température de signes opposés afin de permettre la délivrance au niveau des premier et second détecteurs (38, 48) de signaux optiques ayant des variations opposées avec la température, la somme de ces deux signaux constituant un signal de référence sensiblement constant avec la température.

22. Dispositif de mesure de température muni d'un premier capteur de température selon la revendication 1 comportant une source optique (70), une ligne de transmission aller (72), une partie sensible à boucle unique (74), une ligne de transmission retour (76) et un premier détecteur (78), ce premier capteur étant destiné à coopérer avec un second capteur de température dont une partie sensible (90) est disposée à proximité immédiate de la partie sensible du premier capteur (74), de manière à capter tout ou partie du flux lumineux radiatif émis au voisinage de la dite boucle unique et le diriger vers un second détecteur (86; 94) au moyen d'une (92) ou plusieurs (82, 84) lignes optiques de transmission, les signaux optiques parvenant au niveau des premier et second détecteurs (78 ; 86, 94) ayant des variations opposées avec la température.

23. Dispositif de mesure de température selon la revendication 22, **caractérisé en ce que** les parties sensibles des premier et second capteurs (74, 80) sont courbées sur un rayon voisin, les deux extrémités libres de la fibre réceptrice étant reliées via des lignes de transmission optiques (82, 84) à un second détecteur (86).

24. Dispositif de mesure de température selon la revendication 22, **caractérisé en ce que** la partie sensible du second capteur (90) est de forme droite et disposée au plus près de la partie sensible du premier capteur (74), son extrémité opposée étant reliée à un second détecteur (94) par l'intermédiaire d'une ligne optique de transmission (92).

25. Dispositif de mesure de température selon les revendications 23 ou 24, **caractérisé en ce qu'**il comporte en outre un dispositif optique additionnel (88 ; 96) inséré entre les parties sensibles de deux capteurs et faisant fonction de concentrateur de lumière, afin d'augmenter le rendement de transfert de la lumière du premier capteur (74) vers le second capteur (90).

26. Dispositif de mesure de température selon la revendication 25, **caractérisé en ce que** ledit dispositif optique additionnel est formé d'un matériau dont l'indice de réfraction est voisin de celui de la gaine optique recouvrant le coeur de la fibre du second capteur (90) et légèrement supérieur à l'indice du matériau de gaine optique recouvrant le coeur du premier capteur (74).

27. Dispositif de mesure de température selon la revendication 25 en ce qu'elle dépend de la revendication 23, **caractérisé en ce que** ledit dispositif additionnel présente une forme en demi-anneau (88) de faible section transversale, de telle manière à pouvoir s'insérer entre les deux parties sensibles courbées des premier et second capteurs (74, 80).

28. Dispositif de mesure de température selon la revendication 25 en ce qu'elle dépend de la revendication 24, **caractérisé en ce que** ledit dispositif additionnel présente une forme en quadrant de cercle (96) avec une base arrondie de même courbure que la partie sensible du premier capteur (74) et un sommet pointu venant en contact avec la partie sensible du second capteur (90).

29. Dispositif de mesure de température muni d'un capteur de température selon la revendication 2 comportant une source optique (50), une ligne de transmission à fibre optique (52), une partie sensible de fibre optique (58), un élément réflectif plan (60) et un premier détecteur (62), ce capteur comportant en outre un réseau de diffraction (56) placé juste avant la partie sensible de la fibre optique pour faire rétroréfléchir comme signal de référence une partie du spectre du signal optique émis par la source optique, un élément diffractif plan (54) disposé juste avant cette source optique permettant de diriger ce signal de référence vers un second détecteur (64) et le signal optique de mesure étant dirigé vers le premier détecteur après avoir traversé également cet élément diffractif plan.

30. Dispositif de mesure de température selon la revendication 29, **caractérisé en ce que** ladite source optique est de type spatialement cohérente telle une diode laser ou une diode superluminescente.

31. Procédé de mise en oeuvre du dispositif de mesure de température en ce qu'il dépend de l'une quelconque des revendications 22 à 28 dans lequel on pondère la somme des deux signaux parvenant au niveau des premier et second détecteurs (78 ; 86, 94) pour constituer un signal de référence sensiblement constant avec la température.

32. Procédé selon la revendication 31 dans lequel les deux signaux sont soumis à des opérateurs arithmétiques donnant un résultat de type ratiométrique.

33. Procédé selon la revendication 31 dans lequel les deux signaux sont soumis à un traitement numérique, ces signaux étant préalablement envoyés vers un convertisseur analogique/numérique, puis vers un microcontrôleur programmé pour apporter les corrections par action sur la source ou sur les détecteurs, ou au moyen d'un algorithme approprié.

34. Procédé de fabrication d'un capteur selon l'une quelconque des revendications 1 ou 2, **caractérisé en ce qu'**on utilise un processus thermique de mise en forme de la fibre optique dans lequel la fibre est dénudée sur une certaine longueur de son revêtement mécanique et éventuellement de sa ou ses gaines optiques puis fixée sur un support plan muni de courbures préétablies, l'ensemble étant ensuite porté à une température suffisante pour assurer un ramollissement des matériaux, puis, une fois que la fibre a pris sa forme microcourbée, cette partie dénudée est revêtue d'une ou plusieurs couches de matériaux d'indices décroissants, optiquement compatibles avec l'indice du coeur de la fibre, mais présentant des propriétés de variation vis à vis de la température qui sont opposées à celles du coeur.

35. Procédé selon la revendication 34, **caractérisé en ce qu'**on entoure la partie sensible de la fibre optique d'un dernier matériau pouvant aussi faire office de boîtier qui donnera à ladite partie sensible du capteur sa résistance et sa tenue mécanique définitive.

**Claims**

1. Optical fibre temperature sensor including an optical source (10, 30) for supplying an optical signal, a sensitive optical fibre portion (14, 34), an optical detection and processing circuit (18, 38) for receiving and analysing the optical signal transmitted by the optical source and passing through the sensitive portion, and at least an optical fibre transmission line (12, 32) for connecting the sensitive portion (14, 34) to the optical source (10, 30) and to the detection and processing circuit (18, 38), said sensitive optical fibre portion being arranged along a network of at least one bend of plane structure over a determined length (N1) and with a determined amplitude of curvature (A1), **characterized in that** the or each transmission line is formed by a core and at least an external optical cladding, the optical indices of the core and of the at least a optical cladding being decreasing, the temperature optical index variation coefficients being substantially equal as to their amplitude and sign, and **in that** the sensitive portion is formed in at least a section of optical fibre surrounded by at least one additional layer of a material having an index lower than the index of the optical cladding or claddings and which varies as a function of the temperature in the opposite direction of the optical index of the sensitive portion (14, 34) core, so that to render said portion (14, 34) sensitive for the temperature by positive or negative modulation of its local numerical aperture.

2. Optical fibre temperature sensor including an optical source (10, 30) for supplying an optical signal, a sensitive optical fibre portion (14, 34), an optical detection and processing circuit (18, 38) for receiving and analysing the optical signal transmitted by the optical source and passing through the sensitive portion, and at least an optical fibre transmission line (12, 32) for connecting the sensitive portion (14, 34) to the optical source (10, 30) and to the detection and processing circuit (18, 38), said sensitive optical fibre portion being arranged along a network of at least one bend of plane structure over a determined length (N1) and with a determined amplitude of curvature (A1), **characterized in that** said sensitive portion includes an optical fibre section without its cladding or claddings and surrounded by at least one layer of material having a lower index than that of the optical cladding or claddings and which varies as a function of the temperature in the opposite direction of the optical index of the sensitive portion (14, 34) core, the or each transmission line being formed by a core and at least one external optical cladding, the optical indices of the core and the at least one optical cladding being decreasing, the temperature optical index variation coefficients being substantially equal as to their amplitude and sign.

3. Temperature sensor according to any one of claims 1 or 2, **characterized in that** a second optical transmission line (16, 36) connected to the sensitive optical fibre portion (14, 34) is also connected to the optical detection and procession circuit (18, 38).

4. Temperature sensor according to any one of claims 1 or 2, **characterized in that** a plane reflective element (24) is connected to the sensitive optical fibre portion (14, 34), the optical detection and processing circuit (18, 38) being also connected to the optical fibre transmission line (12, 32) for receiving and analysing the optical signal transmitted by the optical source (10) and passing through the sensitive portion (14, 34) before and after reflection by the reflective element.

5. Temperature sensor according to any one of claims 1 to 4, **characterized in that** said sensitive optical fibre portion is periodically bent (T1).

6. Temperature sensor according to any one of claims 1 to 5, **characterized in that** said layer of additional material has an optical index which decreases with temperature when the core material itself has an optical index which is constant or increases with temperature.

7. Temperature sensor according to any one of claims 1 to 5, **characterized in that** said layer of additional material has an optical index which increases with temperature when the core material itself has an optical index which is constant or decreases with temperature.

8. Temperature sensor according to any one of claims 5 to 7, wherein the sensitive portion has a step index, **characterized in that** said period of curvature is selected so as to satisfy the following inequality:

$$2\pi/T1 \geq 1/\rho^2 kn_1 + 2\sqrt{\Delta}/\rho$$

where

k = $2\pi/\lambda$ is the module of the wave vector and $\lambda$ the optical wavelength;
$n_1$ is the index of refraction of the core material of the optical fibre;
$n_2$ is the index of refraction of the cladding material of the optical fibre;
$\Delta = n_1 - n_2/n_1$ is the relative difference of the indices of refraction of the core and cladding materials of the optical fibre; and
$\rho$ is the optical fibre core radius.

9. Temperature sensor according to any one of claims 5 to 7, wherein the sensitive portion has a parabolic index profile, **characterized in that** said period of curvature is selected so as to satisfy the following equality (or multiple values of this equality):

$$T1 = \rho\pi \sqrt{(2/\Delta)}$$

where

$\Delta = n_1 - n_2/n_1$ is the relative difference of the indices of the core $n_1$ and cladding $n_2$ materials of the optical fibre; and $\rho$ is the optical fibre core radius.

10. Temperature sensor according to any one of claims 1 or 2, **characterized in that** said sensitive portion of the optical fibre is preceded and followed by a fibre section, respectively upstream and downstream (20, 22), intrinsically temperature insensitive and arranged according to a network of periodic bends (T2, T3) determined from the relation :

$$1/\rho^2 kn_1 \leq 2\pi/T \leq 1/\rho^2 kn_1 + 2\sqrt{\Delta}/\rho$$

where

k = $2\pi/\lambda$ is the module of the wave vector and $\lambda$ the optical wavelength;
$n_1$ is the index of refraction of the core material of the optical fibre;
$n_2$ is the index of refraction of the cladding material of the optical fibre;
$\Delta = n_1 - n_2/n_1$ is the relative difference of the indices of refraction of the core and cladding materials of the optical fibre; and
$\rho$ is the optical fibre core radius,

the network of periodic bends having a plane structure over a length (N2, N3) defined by the available contact surface with the medium to monitor and with an amplitude of curvature (A2, A3) weak enough to limit the losses.

11. Temperature sensor according to claim 10, **characterized in that** said determined lengths of the upstream and downstream optical fibre sections are identical.

12. Temperature sensor according to claim 10, **characterized in that** said determined periods of curvature of the upstream and downstream optical fibre sections are determined from the relation $1/\rho^2 kn_1 \leq 2\pi/T \leq 1/\rho^2 kn_1 + 2\sqrt{\Delta}/\rho$ by equalling the terms of the middle and to the right of this inequality so as to obtain optimum coupling between all the trapped modes without causing coupling with the radiated modes.

13. Temperature sensor according to any one of claims 1 to 12, **characterized in that** the or each optical fibre transmission line and the sensitive optical fibre portion form a single optical fibre.

14. Temperature sensor according to claim 13, **characterized in that** said sensitive portion is a multimode fibre.

**15.** Temperature sensor according to claim 1, **characterized in that** said it includes a first and a second optical fibre transmission lines which are interlaced to form a network of bends of small amplitude and determined period.

**16.** Temperature sensor according to claim 15, **characterized in that** said determined period is selected from the relation:

$$1/\rho^2 k n_1 \leq 2\pi/T \leq 1/\rho^2 k n_1 + 2\sqrt{\Delta}/\rho$$

where

$k = 2\pi/\lambda$ is the module of the wave vector and $\lambda$ the optical wavelength;
$n_1$ is the index of refraction of the core material of the optical fibre;
$n_2$ is the index of refraction of the cladding material of the optical fibre;
$\Delta = n_1 - n_2/n_1$ is the relative difference of the indices of refraction of the core and cladding materials of the optical fibre; and
$\rho$ is the optical fibre core radius,

by equalling the terms of the middle and to the right of this inequality, so as to obtain optimum coupling between all the trapped modes without causing coupling with the radiated modes.

**17.** Temperature sensor according to any one of claims 1 or 2, **characterized in that** said optical source is selected from among the following three sources: a coherent light source of the laser type, a partially coherent light source of the superluminescent diode type, or a slightly coherent light source of the luminescent diode type.

**18.** Temperature sensor according to claim 1, **characterized in that** said optical source is fixedly secured to one end of a first optical fibre transmission line (12, 32, 42) and said detection element is fixedly secured to one end of a second optical fibre transmission line (16, 36, 46).

**19.** Temperature sensor according to any one of claims 1 or 2, **characterized in that** the microbent optical fibre has zero deformation stress.

**20.** Temperature measuring device provided with a first temperature sensor according to claim 1 and a second sensor arranged close to the first, these two sensors arranged close to each other being powered by a common optical source (30) and each supplying an optical output signal respectively at first and second detectors, an optical fibre portion (44) of one of these two sensors being temperature insensitive in order to allow a substantially temperature constant reference signal to be supplied to the corresponding detector (48).

**21.** Temperature measuring device provided with two temperature sensors according to claim 1, these two sensors arranged close to each other in the medium to be monitored being powered by a common optical source (30) and each supplying an optical output signal respectively at first and second detectors, the sensitive optical fibre portions (34, 44) of these two sensors having materials with temperature index variation coefficients of opposite signs in order to allow optical signals having opposite temperature variations to be supplied to the first and second detectors (38, 48), the sum of these two signals constituting a substantially temperature constant reference signal.

**22.** Temperature measuring device provided with a first temperature sensor according to claim 1, including an optical source (70), an outward transmission line (72), a single loop sensitive portion (74), a return transmission line (76) and a first sensor (78), this first sensor being intended to co-operate with a second temperature sensor a sensitive portion (90) of which is arranged in immediate proximity to the sensitive portion of the first sensor (74), so as to pick up all or part of the radiating luminous light transmitted in proximity to said single loop and to direct it towards a second sensor (86; 94) by means of one (92) or more (82, 84) optical transmission lines, the optical signals reaching the first and second detectors (78; 86, 94) having opposite temperature variations.

**23.** Temperature measuring device according to claim 22, **characterized in that** the sensitive portions of the first and second sensors (74, 80) are bent according to radii close to one another, the two free ends of the receiving fibre being connected via optical transmission lines (82, 84) to a second detector (86).

**24.** Temperature measuring device according to claim 22, **characterized in that** the sensitive portion of the second sensor (90) is straight and arranged as close as possible to the sensitive portion of the first sensor (74), its opposite end being connected to a second detector (94) via an optical transmission line (92).

25. Temperature measuring device according to claims 23 or 24, **characterised in that** it further includes an additional optical device (88; 96) inserted between the sensitive portions of two sensors and acting as a light concentrator, in order to increase the light transfer efficiency from the first sensor (74) to the second sensor (90).

26. Temperature measuring device according to claim 25, **characterized in that** said additional optical device is formed of a material whose index of refraction is close to that of the optical cladding covering the fibre core of the second sensor (90) and slightly greater than the index of the optical cladding material covering the core of the first sensor (74).

27. Temperature measuring device according to claim 25 in that it depends on claim 23, **characterized in that** said additional device has a half-ring shape (88) of small transverse cross-section, so as to be able to be inserted between the two bent sensitive portions of the first and second sensors (74, 80).

28. Temperature measuring device according to claim 25 in that it depends on claim 24, **characterized in that** said additional device has the shape of a quadrant of a circle (96) with a rounded base of the same curvature as the sensitive portion of the first sensor (74) and a pointed top which comes into contact with the sensitive portion of the second sensor (90).

29. Temperature measuring device provided with a temperature sensor according to claim 2, including an optical source (50), a optical fibre transmission line (52), a sensitive optical fibre portion (58), a plane reflective element (60) and a first detector (62), this sensor further including a diffraction grating placed just in front of the sensitive portion of the optical fibre to cause a part of the spectrum of the optical signal emitted by the optical source to be reflected back as a reference signal, a plane diffractive element (54) arranged just in front of this optical source allowing this reference signal to be directed towards a second detector (64) and the optical measuring signal being directed towards the first detector after also having passed through this plane diffractive element.

30. Temperature measuring device according to claim 29, **characterized in that** said optical source is of a spatially coherent type such as a laser diode or a superluminescent diode.

31. Method for implementing the temperature measuring device in that it depends on any of claims 22 to 28 wherein the sum of the two signals reaching the first and second detectors (78; 86, 94) is pondered to form a substantially temperature constant reference signal.

32. Method according to claim 31 wherein the two signals are subjected to arithmetical operators giving a ratiometrical type result.

33. Method according to claim 31 wherein the two signals are subjected to digital processing, these signals being sent beforehand to an analogue/digital converter, then to a microcontroller programmed to make the corrections by acting on the source or on the detectors, or by means of an appropriate algorithm.

34. Method for manufacturing a sensor according to any one of claims 1 or 2, **characterized in that** an optical fibre heat shaping process is used in which the fibre is stripped of its mechanical coating and possibly its optical cladding or claddings over a certain length then secured to a plane support provided with pre-established bends, the assembly then being brought to a sufficient temperature to ensure softening of the materials, then, once the fibre has taken its microbent shape, this stripped portion is coated with one or more layers of materials with decreasing indices, which are optically compatible with the refraction index of the fibre core, but having variation properties as regards temperature which are opposite from those of the core.

35. Method according to claim 34, **characterized in that** the sensitive portion of the optical fibre is coated with a last material also able to act as a case which will give said sensitive portion of the sensor its resistance and its definitive mechanical strength.

**Patentansprüche**

1. Temperatursensor mit Lichtleitfasern, der eine Lichtquelle (10, 30) zum Liefern eines Lichtsignals, einen empfindlichen Lichtleitfaserabschnitt (14, 34), eine Schaltung (18, 38) zum optischen Erfassen und Verarbeiten, um das von der Lichtquelle ausgesendete und durch den empfindlichen Abschnitt verlaufende Lichtsignal zu empfangen und zu analysieren, und wenigstens eine Lichtleitfaser-Übertragungsleitung (12, 32) zum Verbinden des empfindlichen Abschnitts (14, 34) mit der Lichtquelle (10, 30) und mit der Erfassungs- und Verarbeitungsschaltung (18, 38) umfasst, wobei der empfindliche Lichtleitfaser-Abschnitt in einem Gitter mit wenigstens einer Krümmung mit ebener Struktur auf einer bestimmten Länge (N1) und mit einer bestimmten Krümmungsamplitude (A1) angeordnet ist, **dadurch gekennzeichnet, dass** die oder jede Übertragungsleitung aus einem Kern und wenigstens einer äußeren optischen Hülle gebildet ist, wobei die optischen Indizes des Kerns bzw. der wenigstens einen optischen Hülle abnehmen, wobei die Koeffizienten, die die Veränderung der optischen Indizes mit der Temperatur angeben, hinsichtlich Amplitude und Vorzeichen im Wesentlichen gleich sind, und dass der empfindliche Abschnitt mit einem Teilstück der Lichtleitfaser übereinstimmt, das von wenigstens einer zusätzlichen Schicht aus einem Material mit einem Index, der kleiner als der Index der einen oder der mehreren optischen Hüllen ist und sich in Abhängigkeit von der Temperatur entgegengesetzt zu dem optischen Index des Kerns des empfindlichen Abschnitts (14, 34) ändert, umgeben ist, derart, dass der empfindliche Abschnitt (14, 34) durch positive oder negative Modulation seiner lokalen numerischen Apertur temperaturempfindlich gemacht wird.

2. Temperatursensor mit Lichtleitfaser, der eine Lichtquelle (10, 30) zum Ausgeben eines Lichtsignals, einen empfindlichen Lichtleitfaserabschnitt (14, 34), eine Schaltung (18, 38) zum optischen Erfassen und Verarbeiten, um das von der Lichtquelle ausgesendete und durch den empfindlichen Abschnitt verlaufende Lichtsignal zu empfangen und zu analysieren, und wenigstens eine Lichtleitfaser-Übertragungsleitung (12, 32), um den empfindlichen Abschnitt (14, 34) mit der Lichtquelle (10, 30) und mit der Erfassungs- und Verarbeitungsschaltung (18, 38) zu verbinden, umfasst, wobei der empfindliche Abschnitt der Lichtleitfaser in einem Gitter mit wenigstens einer Krümmung mit ebener Struktur auf einer bestimmten Länge (N1) und mit einer bestimmten Krümmungsamplitude (A1) angeordnet ist, **dadurch gekennzeichnet, dass** dieser empfindliche Abschnitt ein Lichtleitfaser-Teilstück umfasst, das von seiner oder seinen optischen Hüllen befreit und von wenigstens einer Schicht aus einem Material mit einem Index, der kleiner als der Index der einen oder der mehreren optischen Hüllen ist und sich in Abhängigkeit von der Temperatur entgegengesetzt zu dem optischen Index des Kerns des empfindlichen Abschnitts (14, 34) verändert, umgeben ist, wobei die oder jede Übertragungsleitung aus einem Kern und aus wenigstens einer äußeren optischen Hülle gebildet ist, wobei die optischen Indizes des Kerns bzw. der wenigstens einen optischen Hülle abnehmen, wobei die Koeffizienten, die die Veränderung der optischen Indizes mit der Temperatur hinsichtlich Amplitude und Vorzeichen angeben, im Wesentlichen gleich sind.

3. Temperatursensor nach einem der Ansprüche 1 oder 2, **dadurch gekennzeichnet, dass** eine zweite optische Übertragungsleitung (16, 36), die mit dem empfindlichen Abschnitt (14, 34) verbunden ist, außerdem mit der Schaltung (18, 38) zur optischen Erfassung und Verarbeitung verbunden ist.

4. Temperatursensor nach einem der Ansprüche 1 oder 2, **dadurch gekennzeichnet, dass** ein ebenes reflektierendes Element (24) mit dem empfindlichen Lichtleitfaserabschnitt (14, 34) verbunden ist, wobei die Schaltung (18, 38) zur optischen Erfassung und Verarbeitung ebenfalls mit der Lichtleitfaser-Übertragungsleitung (12, 32) verbunden ist, um das von der Lichtquelle (10) ausgesendete und durch den empfindlichen Abschnitt (14, 34) verlaufende Lichtsignal zu empfangen und zu analysieren, bevor und nachdem es durch das reflektierende Element reflektiert wird.

5. Temperatursensor nach einem der Ansprüche 1 bis 4, **dadurch gekennzeichnet, dass** der empfindliche Lichtleitfaserabschnitt periodisch (T1) gekrümmt ist.

6. Temperatursensor nach einem der Ansprüche 1 bis 5, **dadurch gekennzeichnet, dass** die zusätzliche Materialschicht einen optischen Index aufweist, der mit der Temperatur abnimmt, wenn das Kernmaterial seinerseits einen optischen Index aufweist, der konstant ist oder mit der Temperatur zunimmt.

7. Temperatursensor nach einem der Ansprüche 1 bis 5, **dadurch gekennzeichnet, dass** die zusätzliche Materialschicht einen optischen Index aufweist, der mit der Temperatur zunimmt, wenn das Kernmaterial seinerseits einen optischen Index aufweist, der konstant ist oder mit der Temperatur abnimmt.

8. Temperatursensor nach einem der Ansprüche 5 bis 7, dessen empfindlicher Abschnitt einen Indexsprung besitzt, **dadurch gekennzeichnet, dass** die Krümmungsperiode in der Weise gewählt ist, dass die folgende Ungleichung erfüllt ist:

$$\frac{2\pi}{T1} \geq \frac{1}{\rho^2}kn_1 + 2\sqrt{\frac{\Delta}{\rho}}$$

wobei

$$k = \frac{2\pi}{\lambda}$$ der Betrag des Wellenvektors ist und $\lambda$ die Lichtwellenlänge ist;

$n_1$ der Brechungsindex des Kernmaterials der Lichtleitfaser ist;
$n_2$ der Brechungsindex des Hüllenmaterials der Lichtleitfaser ist;

$$\Delta = \frac{n_1 - n_2}{n_1}$$ die relative Differenz der Brechungsindizes der Kern- und Hüllenmaterialien der Lichtleitfasern

ist und
$\rho$ der Radius des Kerns der Lichtleitfaser ist.

**9.** Temperatursensor nach einem der Ansprüche 5 bis 7, dessen empfindlicher Abschnitt einen parabolischen Indexgradienten besitzt, **dadurch gekennzeichnet, dass** die Krümmungsperiode in der Weise gewählt ist, dass die folgende Gleichung (oder Vielfache dieser Gleichung) erfüllt ist:

$$T1 = \rho\pi\sqrt{\frac{2}{\Delta}}$$

wobei

$$\Delta = \frac{n_1 - n_2}{n_1}$$ die relative Differenz der Indizes des Kernmaterials $n_1$ und des Hüllenmaterials $n_2$ der Lichtleitfaser ist und $\rho$ der Radius des Kerns der Lichtleitfaser ist.

**10.** Temperatursensor nach einem der Ansprüche 1 oder 2, **dadurch gekennzeichnet, dass** dem empfindlichen Abschnitt der Lichtleitfaser ein stromaufseitiges bzw. ein stromabseitiges Faserteilstück (20, 22) vorhergeht bzw. folgt, das für die Temperatur intrinsisch unempfindlich ist und in einem Gitter mit periodischen Krümmungen (T2, T3) angeordnet ist, die durch die folgende Beziehung festgelegt sind:

$$\frac{1}{\rho^2}kn_1 \leq \frac{2\pi}{T} \leq \frac{1}{\rho^2}kn_1 + 2\sqrt{\frac{\Delta}{\rho}}$$

wobei

$$k = \frac{2\pi}{\lambda}$$ der Betrag des Wellenvektors ist und $\lambda$ die Lichtwellenlänge ist;

$n_1$ der Brechungsindex des Kernmaterials der Lichtleitfaser ist;
n2 der Brechungsindex des Hüllenmaterials der Lichtleitfaser ist;

$$\Delta = \frac{n_1 - n_2}{n_1}$$ die relative Differenz der Brechungsindizes der Kern- und Hüllenmaterialien der Lichtleitfaser

ist und
$\rho$ der Radius des Kerns der Lichtleitfaser ist,

wobei das Gitter aus periodischen Krümmungen eine ebene Struktur auf einer Länge (N2, N3) aufweist, die durch die verfügbare Kontaktoberfläche mit dem zu überwachenden Milieu definiert ist, wobei die Krümmungsamplitude (A2, A3) ausreichend gering ist, um die Verluste zu begrenzen.

**11.** Temperatursensor nach Anspruch 10, **dadurch gekennzeichnet, dass** die bestimmten Längen des stromaufseitigen und des stromabseitigen Lichtleitfaserteilstücks gleich sind.

**12.** Temperatursensor nach Anspruch 10, **dadurch gekennzeichnet, dass** die bestimmten Krümmungsperioden des stromaufseitigen und des stromabseitigen Lichtleitfaserteilstücks ausgehend von der Beziehung

$$\frac{1}{\rho^2} k n_1 \leq \frac{2\pi}{T} \leq \frac{1}{\rho^2} k n_1 + 2\sqrt{\frac{\Delta}{\rho}}$$

bestimmt werden, indem die Terme in der Mitte und auf der rechten Seite dieser Ungleichung gleichgesetzt werden, wodurch eine optimale Kopplung zwischen allen geführten Ausbreitungsmoden gewährleistet ist, ohne Kopplungen mit den Strahlungsmoden hervorzurufen.

**13.** Temperatursensor nach einem der Ansprüche 1 bis 12, **dadurch gekennzeichnet, dass** die oder jede Lichtleitfaser-Übertragungsleitung und der empfindliche Lichtleitfaserabschnitt eine einzige Lichtleitfaser bilden.

**14.** Temperatursensor nach Anspruch 13, **dadurch gekennzeichnet, dass** der empfindliche Abschnitt durch eine Multimodenfaser gebildet ist.

**15.** Temperatursensor nach Anspruch 1, **dadurch gekennzeichnet, dass** er eine erste und eine zweite Lichtleitfaser-Übertragungsleitung umfasst, die miteinander verschachtelt sind, um ein Gitter mit Krümmungen geringer Amplitude und bestimmter Periode zu bilden.

**16.** Temperatursensor nach Anspruch 15, **dadurch gekennzeichnet, dass** die bestimmte Periode ausgehend von der Beziehung

$$\frac{1}{\rho^2} k n_1 \leq \frac{2\pi}{T} \leq \frac{1}{\rho^2} k n_1 + 2\sqrt{\frac{\Delta}{\rho}}$$

bestimmt wird, wobei

$k = \dfrac{2\pi}{\lambda}$   der Betrag des Wellenvektors ist und $\lambda$ die Lichtwellenlänge ist;

$n_1$ der Brechungsindex des Kernmaterials der Lichtleitfaser ist;
$n_2$ der Brechungsindex des Hüllenmaterials der Lichtleitfaser ist;

$\Delta = \dfrac{n_1 - n_2}{n_1}$   die relative Differenz der Brechungsindizes des Kernmaterials und des Hüllenmaterials der

Lichtleitfaser ist und
$\rho$ der Radius des Kerns der Lichtleitfaser ist,

indem die Terme in der Mitte und auf der rechten Seite dieser Ungleichung gleichgesetzt werden, derart, dass eine optimale Kopplung zwischen der Gesamtheit der geführten Ausbreitungsmoden erhalten wird, ohne eine Kopplung mit den Strahlungsmoden hervorzurufen.

**17.** Temperatursensor nach einem der Ansprüche 1 oder 2, **dadurch gekennzeichnet, dass** die Lichtquelle unter den drei folgenden Quellen ausgewählt ist: eine kohärente Lichtquelle des Typs Laser, eine partiell kohärente Lichtquelle des Typs Superlumineszenzdiode oder eine schwach kohärente Lichtquelle des Typs Lumineszenzdiode.

**18.** Temperatursensor nach Anspruch 1, **dadurch gekennzeichnet, dass** die Lichtquelle an einem Ende einer ersten Lichtleitfaser-Übertragungsleitung (12, 32, 42) fest verbunden ist, wobei das Erfassungselement mit einem Ende einer zweiten Lichtleitfaser-Übertragungsleitung (16, 36, 46) fest verbunden ist.

**19.** Temperatursensor nach einem der Ansprüche 1 oder 2, **dadurch gekennzeichnet, dass** die mikrogekrümmte Lichtleitfaser Verformungsbeanspruchungen von null unterliegt.

**20.** Temperaturmessvorrichtung, die mit einem ersten Temperatursensor nach Anspruch 1 und mit einem in der Nähe des ersten Sensors angeordneten zweiten Sensor versehen ist, wobei die zwei Sensoren, die nahe nebeneinander angeordnet sind, durch eine gemeinsame Lichtquelle (30) gespeist werden und jeweils ein Ausgangslichtsignal auf Höhe eines ersten bzw. eines zweiten Detektors liefern, wobei ein Lichtleitfaserabschnitt (44) eines dieser zwei Sensoren nicht temperaturempfindlich ist, um die Lieferung auf Höhe des entsprechenden Detektors (48) eines in Bezug auf die Temperatur im Wesentlichen konstanten Referenzsignals zu ermöglichen.

**21.** Temperaturmessvorrichtung, die mit zwei Temperatursensoren nach Anspruch 1 versehen ist, wobei diese beiden Sensoren, die nahe nebeneinander in dem zu überwachenden Milieu angeordnet sind, von einer gemeinsamen Lichtquelle (30) gespeist werden und jeweils ein Ausgangslichtsignal auf Höhe eines ersten bzw. eines zweiten Detektors liefern, wobei die empfindlichen Lichtleitfaserabschnitte (34, 44) dieser beiden Sensoren Materialien mit mit der Temperatur variierenden Indexkoeffizienten mit entgegengesetzten Vorzeichen haben, um die Lieferung auf Höhe des ersten und des zweiten Detektors (38, 48) von Lichtsignalen zu ermöglichen, die sich in Abhängigkeit von der Temperatur entgegengesetzt ändern, wobei die Summe dieser beiden Signale ein Referenzsignal bildet, das in Bezug auf die Temperatur im Wesentlichen konstant ist.

**22.** Temperaturmessvorrichtung, die mit einem ersten Temperatursensor nach Anspruch 1 versehen ist, der eine Lichtquelle (70), eine Vorwärtsübertragungsleitung (72), einen empfindlichen Abschnitt (74) mit Einzelschleife, eine Rückwärtsübertragungsleitung (76) und einen ersten Detektor (78) umfasst, wobei dieser erste Sensor dazu bestimmt ist, mit einem zweiten Temperatursensor zusammenzuwirken, dessen empfindlicher Abschnitt (90) in unmittelbarer Nähe des empfindlichen Abschnitts des ersten Sensors (74) angeordnet ist, derart, dass der gesamte Strahlungslichtfluss oder ein Teil hiervon, der in der Umgebung der genannten Einzelschleife ausgesendet wird, aufgefangen und zu einem zweiten Detektor (86; 94) mittels einer (92) oder mehrerer (82, 84) optischer Übertragungsleitungen gelenkt wird, wobei sich die Lichtsignale, die auf Höhe des ersten und des zweiten Detektors (78; 86, 94) ankommen, in Abhängigkeit von der Temperatur entgegengesetzt ändern.

**23.** Temperaturmessvorrichtung nach Anspruch 22, **dadurch gekennzeichnet, dass** die empfindlichen Abschnitte des ersten und des zweiten Sensors (74, 80) auf einem benachbarten Radius gekrümmt sind, wobei die zwei freien Enden der Empfangsfaser über optische Übertragungsleitungen (82, 84) mit einem zweiten Detektor (86) verbunden sind.

**24.** Temperaturmessvorrichtung nach Anspruch 22, **dadurch gekennzeichnet, dass** der empfindliche Abschnitt des zweiten Sensors (90) eine gerade Form hat und so nahe wie möglich bei dem empfindlichen Abschnitt des ersten Sensors (74) angeordnet ist, wobei sein gegenüberliegendes Ende über eine optische Übertragungsleitung (92) mit einem zweiten Detektor (94) verbunden ist.

**25.** Temperaturmessvorrichtung nach den Ansprüchen 23 oder 24, **dadurch gekennzeichnet, dass** sie außerdem eine zusätzliche optische Vorrichtung (88, 96) umfasst, die zwischen die empfindlichen Abschnitte der zwei Sensoren eingesetzt ist und die Funktion eines Lichtkonzentrierers hat, um die Lichtübertragungsleistung von dem ersten Sensor (74) zu dem zweiten Sensor (90) zu erhöhen.

**26.** Temperaturmessvorrichtung nach Anspruch 25, **dadurch gekennzeichnet, dass** die zusätzliche optische Vorrichtung aus einem Material gebildet ist, dessen Brechungsindex in der Nähe jenes der optischen Hülle liegt, die den Kern der Faser des zweiten Sensors (90) abdeckt, und etwas größer als der Index des Materials der optischen Hülle ist, die den Kern des ersten Sensors (74) abdeckt.

**27.** Temperaturmessvorrichtung nach Anspruch 25, wenn abhängig von Anspruch 23, **dadurch gekennzeichnet, dass** die zusätzliche Vorrichtung die Form eines Halbrings (88) mit kleinem transversalen Querschnitt aufweist, derart, dass sie zwischen die beiden gekrümmten empfindlichen Abschnitte des ersten bzw. des zweiten Sensors (74, 80) eingesetzt werden kann.

28. Temperaturmessvorrichtung nach Anspruch 25, wenn abhängig von Anspruch 24, **dadurch gekennzeichnet, dass** die zusätzliche Vorrichtung die Form eines Kreisquadranten (96) mit einer abgerundeten Basis mit einer Krümmung, die gleich jener des empfindlichen Abschnitts des ersten Sensors (74) ist, und mit einem zugespitzten Scheitelpunkt, der mit dem empfindlichen Abschnitt des zweiten Sensors (90) in Kontakt gelangt, aufweist.

29. Temperaturmessvorrichtung, die mit einem Temperatursensor nach Anspruch 2 versehen ist, der eine Lichtquelle (50), eine Lichtleitfaser-Übertragungsleitung (52), einen empfindlichen Lichtleitfaserabschnitt (58), ein ebenes reflektierendes Element (60) und einen ersten Detektor (62) umfasst, wobei dieser Sensor außerdem ein Beugungsgitter (56) aufweist, das direkt vor dem empfindlichen Abschnitt der Lichtleitfaser angeordnet ist, um einen Teil des Spektrums des Lichtsignals, das von der Lichtquelle ausgesendet wird, als Referenzsignal zurückzureflektieren, wobei ein ebenes Beugungselement (54), das direkt vor dieser Lichtquelle angeordnet ist, ermöglicht, dieses Referenzsignal zu einem zweiten Detektor (64) zu lenken, und das Messlichtsignal zu dem ersten Detektor gelenkt wird, nachdem es ebenfalls durch dieses ebene Beugungselement gelaufen ist.

30. Temperaturmessvorrichtung nach Anspruch 29, **dadurch gekennzeichnet, dass** die Lichtquelle vom räumlich kohärenten Typ wie etwa eine Laserdiode oder eine Superlumineszenzdiode ist.

31. Verfahren zum Herstellen einer Temperaturmessvorrichtung, wenn abhängig von einem der Ansprüche 22 bis 28, bei dem die Summe der zwei Signale, die auf Höhe des ersten bzw. des zweiten Detektors (78; 86, 94) ankommen, gewichtet wird, um ein Referenzsignal zu bilden, das in Bezug auf die Temperatur im Wesentlichen konstant ist.

32. Verfahren nach Anspruch 31, bei dem die zwei Signale arithmetischen Operatoren unterworfen werden, die ein Ergebnis des ratiometrischen Typs ergeben.

33. Verfahren nach Anspruch 31, bei dem die zwei Signale einer digitalen Verarbeitung unterworfen werden, wobei diese Signale vorher zu einem Analog/Digital-Umsetzer und dann zu einem Mikrocontroller geschickt werden, der so programmiert ist, dass er durch Einwirken auf die Quelle oder auf die Detektoren oder mittels eines geeigneten Algorithmus - Korrekturen ausführt.

34. Verfahren für die Herstellung eines Sensors nach einem der Ansprüche 1 oder 2, **dadurch gekennzeichnet, dass** ein thermischer Prozess zum Formen der Lichtleitfaser verwendet wird, bei dem die Lichtleitfaser auf einer bestimmten Länge von ihrer mechanischen Beschichtung und eventuell von ihrer oder ihren optischen Hüllen befreit wird und dann auf einen ebenen Träger fixiert wird, der mit im Voraus festgelegten Krümmungen versehen ist, wobei die Gesamtheit anschließend auf eine Temperatur gebracht wird, die ausreicht, um ein Erweichen der Materialien sicherzustellen, wobei anschließend, sobald die Faser ihre mikrogekrümmte Form angenommen hat, dieser freigelegte Teil mit einer oder mit mehreren Schichten aus Materialien mit abnehmenden Indizes, die mit dem Index des Kerns der Faser optisch kompatibel sind, beschichtet wird, jedoch in Bezug auf die Temperatur Veränderungseigenschaften zeigen, die zu jenen des Kerns entgegengesetzt sind.

35. Verfahren nach Anspruch 34, **dadurch gekennzeichnet, dass** der empfindliche Abschnitt der Lichtleitfaser von einem letzten Material umgeben wird, das außerdem als Gehäuse dienen kann, das dem empfindlichen Abschnitt des Sensors seinen endgültigen mechanischen Widerstand und seine endgültige mechanische Haltbarkeit verleiht.

FIG.1

FIG.2

FIG.3

FIG.4

FIG.5

FIG.6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2664695